**Europäisches Patentamt**

**European Patent Office**

**Office européen des brevets**

(19)

(11) Numéro de publication: **0 008 972**

**B1**

(12) **FASCICULE DE BREVET EUROPEEN**

(45) Date de publication du fascicule du brevet: **06.10.82**

(21) Numéro de dépôt: **79400572.8**

(22) Date de dépôt: **14.08.79**

(51) Int. Cl.³: **B 23 C 5/22**, B 23 C 5/10, B 23 B 51/00

(54) **Plaquette de coupe pour usinage rayonné de précision.**

(30) Priorité: **25.08.78 FR 7824660**
**29.11.78 FR 7833702**

(43) Date de publication de la demande:
**19.03.80 Bulletin 80/6**

(45) Mention de la délivrance du brevet:
**06.10.82 Bulletin 82/40**

(84) Etats contractants désignés:
**CH DE GB IT SE**

(56) Documents cités:
**FR - A - 12 804 79**
**FR - A - 15 082 44**

(73) Titulaire: **A.R.A.F. Société dite:**
**2, rue d'Aigremont**
**F-78300 Poissy (FR)**

(72) Inventeur: **Durand, Alfred**
**25 Boulevard Rose**
**F-78300 Poissy (FR)**

(74) Mandataire: **Casalonga, Alain et al,**
**BUREAU D.A. CASALONGA OFFICE JOSSE &**
**PETIT Baaderstrasse 12-14**
**D-8000 München 5 (DE)**

Courier Press, Leamington Spa, England.

## Plaquette de coupe pour usinage rayonné de précision

La présente invention se rapporte à une plaquette de coupe de précision et en particulier à une plaquette de fraises boule destinée à des fraiseuses à reproduire.

Les machines connues à reproduire par fraisage utilisent des fraises hémisphériques soit en acier rapide soit en carbure de tungstène, en monobloc pour les petits diamètres ou en plaquettes de carbure de tungstène brasées pour les diamètres supérieurs à 10—12 mm.

Les nouvelles techniques de fraisage en reproduction, notamment en ce qui concerne les maquettes, prototypes et outils de presse dans les industries de l'automobile et de l'aviation, nécessitent des fraises hémisphériques de plus en plus précises au niveau du rayon. S'agissant souvent de machines outils à commande numérique, l'évolution de la fraise est programmée sur la base d'un rayon précis. La fraise utilisée dans des machines numériques doit, grâce à sa précision de rayon, assurer la précision de forme de la partie fraisée.

Les fraises connues du commerce, qu'elles soient à faces de coupe multiples lorsqu'une grande précision n'est pas exigée, soit à deux faces de coupe lorsqu'une précision plus poussée est exigée, sont assez imprécises. Leur fabrication dépend pour beaucoup de l'habileté des opérateurs de fabrication et de réaffûtage, ce qui ne permet pas d'atteindre des précisions de l'ordre du centième de millimètre, souvent demandées, et il est très difficile voire même impossible d'affûter de telles fraises assurant cette précision au cours de leur évolution au fraisage, car l'affûtage au rayonneur subit entièrement l'influence de l'habileté de l'opérateur.

Les appareils connus sont généralement volumineux et soumis à des jeux fonctionnels ne permettant pas avec sécurité de garantir des rayons précis et donnent à la réalisation des fraises hémisphériques un caractère artisanal assujetti à l'habileté manuelle de l'opérateur.

Il résulte des procédés actuellement en utilisation que:

— l'impératif de parfaite concentricité des arêtes coupantes qui génèrent en évolution la surface sphérique (définition de la sphère) est aléatoire;
— la rigueur de la valeur du rayon échappe à une réalisation systématique.

On connaît par ailleurs par le brevet français 1.280.479 un outil à plaquette en forme de disque destiné à l'usinage de cuvettes sphériques, mais qui serait inadapté pour le fraisage en reproduction de formes diverses par son inaptitude de coupe en bout (cas d'un disque d'enveloppe cylindrique ou équivalente) ou encore par la constitution d'une seule face de coupe sur la demi-périphérie travaillante du disque (cas d'un disque d'enveloppe tronconique).

La présente invention a pour objet une plaquette de coupe spéciale peu coûteuse qui permet d'éviter les inconvénients ci-dessus et qui, positionnée sur un corps, constitue une fraise boule de très grande précision dont tous les points de coupe placés sur un rayon sont à égale distance du centre de crayon et qui est apte à couper sur 180° de l'avant de la plaquette si besoin et également au centre. Une telle plaquette, comprenant deux faces de coupe et pouvant être montée dans un porte-outil rotatif, est essentiellement caractérisée par le fait qu'elle est agencée sous forme d'un disque présentant deux troncs de cône identiques opposés, à base circulaire commune formant le plant médian du disque dont l'axe médian longitudinal se trouve en alignement avec l'axe de rotation du porte-outil et passe par le centre du cercle de la base commune, chaque tronc de cône ayant une face de coupe dans le plan médian disposée symétriquement de part et d'autre de l'axe médian longitudinal obtenue par une entaille en profondeur dans le tronc de cône respectif effectuée le long dudit plan médian et limitée par un plan incliné de telle façon que les deux faces de coupe passent en un point commun situé sur l'axe médian longitudinal et forment avec lesdits plans inclinés des cordes du cercle de base qui partent dudit point commun et forment entre elles un angle aigu, tandis que la surface conique correspondante forme au droit de la face de coupe l'angle de dépouille avec un plan tangent au cercle de base et perpendiculaire au plan médian.

Une telle plaquette est aisément réalisable sous forme monobloc, mais dans les plus grandes dimensions d'emploi d'une telle plaquette, elle peut aussi être réalisée en deux parties pour davantage faciliter sa fabrication.

Dans ce dernier cas, elle est alors caractérisée par le fait que les deux troncs de cône opposés constitutifs du disque et à base circulaire commune sont réalisés séparément. L'assemblage de ces troncs de cône, pour former le disque de la plaquette après leur usinage, peut simplement résulter de leur montage dans le porte-outil.

D'autres avantages de l'invention ressortiront de la description ci-après faite de deux modes de réalisation de la plaquette, donnés à titre d'exemples en regard du dessin annexé, dans lequel:

— la figure 1 est une vue en plan schématique d'une plaquette de coupe selon l'invention entraînée en rotation par un porte-outil;
— la figure 2 est une vue éclatée en perspective de la plaquette de la figure 1 et de son porte-outil;

— la figure 3 est une vue en bout de la plaquette de la figure 2 en direction de son axe médian longitudinal X—X';

— la figure 4 est une vue éclatée en perspective d'une plaquette de coupe en deux parties, avant montage dans ce porte-outil.

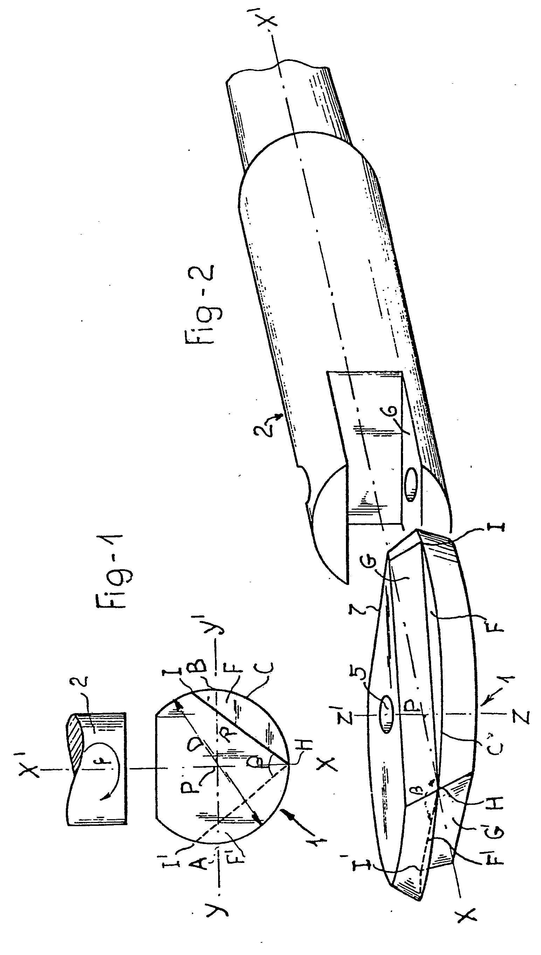

En se reportant à la figure 1, on voit une plaquette de coupe circulaire 1 présentant un axe médian longitudinal X—X', coïncidant avec celui d'un porte-outil 2 qui l'entraîne en rotation autour de cet axe, suivant la flèche f.

La plaquette 1 présente dans son plan médian longitudinal un centre P situé sur l'axe médian longitudinal X—X' et deux faces de coupe F, F' symétriques par rapport à cet axe et passant par un point commun H situé sur le cercle C de diamètre D de la plaquette. Les faces de coupe sont limitées par des cordes HI et HI' de ce cercle. L'angle IHI' ($\beta$) formé par ces cordes est inférieur à 90°, de sorte que les points extrêmes I et I' des faces de coupe F, F' se trouvent au-delà de l'axe transversal YY' passant par le centre P et délimitant la demi-circonférence AHB de cercle $C_o$.

Lors de la rotation de la plaquette de coupe 1 autour de l'axe longitudinal X—X', elle engendre une demi-sphère du même rayon R=D/2 que la demi-circonférence AHB, chaque point de cette demi-sphère se trouve donc à égale distance du centre P.

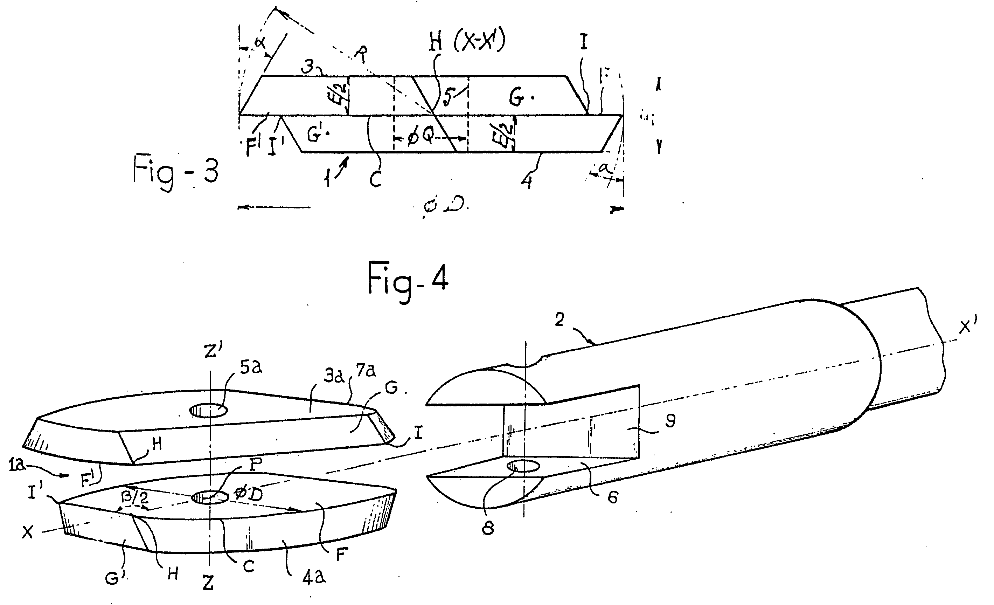

En se reportant maintenant aux figures 2 et 3, on voit une plaquette 1 usinée selon le principe de la figure 1 par rectification et meulage. Un disque d'une épaisseur E est formé par deux parties tronconiques opposées identiques 3, 4 dont le diamètre du cercle de base commun C est égal à D et l'épaisseur de chaque tronc de cône est égale à E/2. Les deux faces de coupe F, F' des deux troncs de cône 3, 4 sont obtenues en entaillant dans le plan médian de cercle C de la plaquette le tronc de cône supérieur 3 d'un côté et, de façon symétrique par rapport à l'axe longitudinal X—X', le tronc de cône inférieur 4. Chaque face de coupe est limitée en profondeur par un plan G, G', incliné d'un angle déterminé par rapport au plan médian de la base commune pour faciliter le débouché des copeaux. Les faces de coupe F, F' forment à leur intersection avec les plans inclinés respectifs G, G' des cordes HI, HI' du cercle médian C qui partent du point commun H des faces de coupe F, F' et G, G' et forment entre elles un angle aigu "$\beta$", ce qui permet aux faces de coupe de dépasser l'axe médian transversal passant par le centre P de la plaquette.

L'angle "$\alpha$" formé par la surface conique de tronçons tronconiques respectifs 3, 4 avec le plan tangent au cercle C et perpendiculaire au plan médian des faces de coupe F, F', constitue l'angle de dépouille choisie pour la coupe.

Tous les points situés sur les arcs de coupe HI et HI' se trouvent à égale distance du centre P et leur rayon est donc toujours égal à D/2.

Les surfaces coniques de deux tronçons de cône 3, 4 ainsi que les deux faces de coupe F, F' peuvent être obtenues par un retournement à 180° du disque de la plaquette au cours de l'usinage de fabrication.

Un alésage préalable 5 dans l'épaisseur E de la plaquette, dont l'axe Z—Z' passe par le centre P perpendiculairement à l'axe X—X' de la plaquette, facilite la rectification de surfaces usinées de celle-ci et permet sa fixation sur son porte-outil présentant des perçages correspondants dans sa chape 6.

Un méplat 7 pratiqué sur la plaquette perpendiculairement à son axe longitudinal passant par le centre P (figure 2) et à l'opposé du point H permet de stabiliser la plaquette par coincement sur son porte-outil 2.

La plaquette 1a de la figure 4 est formée par la juxtaposition de deux troncs de cône identiques, séparés et opposés 3a, 4a d'un diamètre D et d'une épaisseur E/2 pour former un disque de plaquette lorsque leurs grandes bases circulaires C se trouvent accolées. La surface conique de chaque tronc de cône est entaillée en profondeur d'une côté de l'axe longitudinal X—X' de la base C, de façon à former un plan G, G' incliné par rapport au plan de la base C, partant d'un point H de l'axe longitudinal et formant dans le cercle de base C une corde HI, HI'. Cette corde forme avec l'axe longitudinal X—X' un angle déterminé $\beta$12.

Chaque tronc de cône présente un alésage 5a effectué, suivant un axe commun Z—Z', perpendiculairement à la grande base C et passant par le centre P de la plaquette se trouvant sur l'axe longitudinal X—X' de celle-ci.

Sur chaque tronc de cône 3a, 4a est pratiqué, perpendiculairement à l'axe X—X' et à l'opposé du point commun H, un méplat 7a.

Les alésages 5a permettent la fixation conjointe par un organe de fixation non représenté des troncs de cône 3a, 4a introduits dans une chape 6 du porte-outil 2. Celle-ci présente également dans ses branches un alésage 8 du même diamètre que l'alésage 5a. Lorsque les troncs de cône opposés et accolés sont introduits et enserrés dans la chape, leur méplat 7a bute contre le fond 9 de la chape, ou peut y être bloqué avec interposition d'un organe de coincement non représenté, ce qui empêche tout déplacement de la plaquette tout entière et un déplacement des troncs de cône dans le plan C de la base commune. Les faces de coupe F, F' se trouvent formées dans le plan de la base commune C des troncs de cône 4a et 3a, où elles sont limitées respectivement par la corde HI du tronc de cône opposé 3a et HI' du tronc de cône opposé 4a.

**Revendications**

1. Plaquette de coupe circulaire pour usinage rayonné de précision comprenant deux faces de coupe et pouvant être montée dans un porte-outil rotatif, caractérisée par le fait qu'elle est agencée sous forme d'un disque (1) présentant deux troncs de cône identiques (3, 4) opposés à base circulaire commune (C) formant le plan médian du disque dont l'axe médian longitudinal (X—X') se trouve en alignement avec l'axe de rotation du porte-outil (2) et passe par le centre (P) du cercle (C) de la base commune, chaque tronc de cône (3, 4) ayant une face de coupe (F, F') dans le plan médian disposée symétriquement de part et d'autre de l'axe médian longitudinal (X—X'), obtenue par une entaille en profondeur dans le tronc de cône respectif effectuée le long dudit plan médian et limitée par un plan incliné de telle façon que les deux faces de coupe (F, F') passent en un point commun (H) situé sur l'axe médian longitudinal (X—X') et forment avec lesdits plans inclinés des cordes (HI, HI') du cercle de base (C) qui partent dudit point commun (H) et forment entre elles un angle aigu ($\beta$), tandis que la surface conique correspondante forme au droit de la face de coupe l'angle de dépouille ($\alpha$) avec un plan tangent au cercle de base (C) et perpendiculaire au plan médian.

2. Plaquette selon la revendication 1, caractérisée par le fait qu'un alésage (5) est percé perpendiculairement au plan médian de la base du disque (1), l'axe d'alésage coïncidant avec le centre (P) de la plaquette.

3. Plaquette selon les revendications 1 ou 2, caractérisée par le fait que l'alésage (5), les surfaces coniques et les faces de coupe (F, F') des deux parties tronconiques (3, 4) s'obtiennent par retournement à 180° de la plaquette lors de son usinage par rectification et meulage facilité par l'alésage (5) dans le centre (P).

4. Plaquette selon la revendication 1, caractérisée par le fait que le disque (1) présente un méplat (7) perpendiculaire à l'axe longitudinal médian (X—X') et à son extrémité opposée au point commun (H) des faces de coupe (F, F').

5. Plaquette de coupe selon la revendication 1, caractérisée par le fait que les deux troncs de cône (3a, 4a) constitutifs du disque (1a) sont réalisés séparément et assemblés pour former ladite base circulaire commune.

6. Plaquette suivant la revendication 5, caractérisée par le fait que l'assemblage des troncs de cône (3a, 4a) pour former le disque de la plaquette après leur usinage, résulte de leur montage dans le porte-outil (2) au moyen d'un organe de fixation approprié.

**Patentansprüche**

1. Rundes Schneidplättchen für spanabhebende strahlenförmige Präzisionsbearbeitung mit zwei Spanflächen, das in einen rotierenden Werkzeughalter eingespannt we den kann, dadurch gekennzeichnet, dass es in der Form einer Scheibe (1) aufgebaut ist und zwei identische Kegelstümpfe (3, 4) aufweist, die einander gegenüberliegend eine gemeinsame kreisförmige Grundfläche (C) haben, die die Mittelebene der Scheibe bildet, deren Mittellängsachse (X—X') mit der Rotationsachse des Werkzeughalters (2) zusammenfällt und durch den Mittelpunkt (P) des Kreises (C) der gemeinsamen Grundfläche geht, wobei jede Kegelstumpf (3, 4) eine Spanfläche (F, F') in der Mittelebene umfasst, die symmetrisch auf beiden Seiten der Mittellängsachse (X—X') angeordnet sind, und die erzeugt wird durch einen tiefen Einschnitt im entsprechenden Kegelstumpf, der entlang der genannten Mittelebene ausgeführt ist und durch eine schiefe Ebene begrenzt wird, so dass die beiden Spanflächen (F, F') durch einen gemeinsamen Punkt (H) auf der Mittellängsachse (X—X') gehen und mit den genannten schiefen Ebenen Sehnen (HI, HI') des Grundkreises (C) bilden, die von dem gemeinsamen Punkt (H) ausgehen und miteinander einen spitzen Winkel ($\beta$) bilden, während die entsprechende Kegelfläche zur Spanfläche mit einer Tangentialebene des Grundkreises (C) und senkrecht zur Mittelebene den Spanwinkel ($\alpha$) bildet.

2. Plättchen gemäss Anspruch 1, dadurch gekennzeichnet, dass eine Bohrung (5) senkrecht zur Mittelebene des Grundkreises der Scheibe (1) gebohrt ist, wobei die Achse der Bohrung durch den Mittelpunkt (P) des Plättchens geht.

3. Plättchen gemäss Anspruch 1 oder 2, dadurch gekennzeichnet, dass die Bohrung (5), die Kegelflächen und die Spanflächen (F, F') der beiden kegelstumpfförmigen Teile (3, 4) durch Umdrehen des Plättchens um 180° während der spanenden Bearbeitung durch Schleifen und Abrichtschleifen erhalten werden, erleichtert durch die Bohrung (5) durch den Mittelpunkt (P).

4. Plättchen gemäss Anspruch 1, dadurch gekennzeichnet, dass die Scheibe (1) eine Abflachung (7) senkrecht zur Mittellängsachse (X—X') gegenüber dem gemeinsamen Punkt (H) der Spanfläche (F, F') aufweist.

5. Schneidplättchen gemäss Anspruch 1, dadurch gekennzeichnet dass die beiden Kegelstümpfe (3a, 4a), die die Scheibe (1a) bilden, einzeln hergestellt und zusammengesetzt werden um die genannte gemeinsame kreisförmige Grundfläche zu bilden.

6. Plättchen gemäss Anspruch 5, dadurch gekennzeichnet, dass sich die Zusammensetzung der kegelstumpfförmigen Körper (3a, 4a) zwecks Bildung der Scheibe des Plättchens nach ihrer spanenden Bearbeitung aus ihrem Einbau in den Werkzeughalter (2) mittels eines geeigneten Befestigungsmittels ergibt.

**Claims**

1. A circular cutter insert for precision radius machining comprising two cutting faces and capable of being fitted in a rotary blade holder, characterized in that it is designed in the shape of a disc (1) having two opposite identical truncated cones (3, 4) with a common circular base (C) forming the mid-plane of the disc, the longitudinal central axis (X—X') of which is aligned with the axis of rotation of the blade holder (2) and passes through the centre (P) of the common base circle (C), with each truncated cone (3, 4) having a cutting face (F, F') in the mid-plane and placed symmetrically on either side of the longitudinal central axis (X—X'), obtained by a cut made deep into the respective truncated cone along the said mid-plane, which cut is bounded by an inclined plane, so that the two cutting faces (F, F') pass through a common point (H) located on the longitudinal central axis (X—X') and form with the said inclined planes chords (HI, HI') of the base circle (C) which start from the said common point (H) and form an acute angle (β) between them, whilst the corresponding conical surface forms along the cutting faces with a plane tangent to the base circle (C) and perpendicular to the mid-plane, the relief angle (α).

2. The insert according to claim 1, characterized in that a hole (5) is made perpendicularly to the mid-plane of the disc base (1), with the hole bore centre line passing through the centre (P) of the insert.

3. The insert according to claims 1 or 2, characterized in that the hole bore (5), the conical surfaces and the cutting faces (F, F') of the two truncated cone sections (3, 4) are obtained by turning the insert through 180° when it is machined by grinding, facilitated by the hole (5) in the centre (P).

4. The insert according to claim 1, characterized in that the disc (1) has a flat (7) perpendicular to the longitudinal central axis (X—X') and at its opposite end to the point (H) common to the cutting faces (F, F').

5. The insert according to claim 1, characterized in that the two truncated cones (3a, 4a) forming the disc (1a) are made separately and assembled together to form the said common circular base.

6. The insert according to claim 5, characterized in that the truncated cones (3a, 4a) are assembled together after machining to form the insert disc as a result of being installed in the blade holder (2) by means of a suitable fixing component.

Fig-1

Fig-2

0 008 972

Fig-3

Fig-4

0 008 972